# EUROPÄISCHE PATENTSCHRIFT

(11) **EP 1 775 150 B1**
(45) Veröffentlichungstag und Bekanntmachung des Hinweises auf die Patenterteilung: **14.11.2012**
(21) Anmeldenummer: 06019075.8
(22) Anmeldetag: 12.09.2006
(51) Int. Cl.: B60H 1/00

(54) **Kraftfahrzeug-Klimaanlage und Verfahren zu deren Regelung**
Vehicle air conditioner and method for operating the same
Dispositif de climatisation d'un véhicule et procédé de commande pour un tel dispositif

(30) Priorität: 11.10.2005 DE 102005048988
(43) Veröffentlichungstag der Anmeldung: 18.04.2007
(73) Patentinhaber: Behr GmbH & Co. KG, 70469 Stuttgart (DE)
(72) Erfinder: Dittrich, André, Dipl.-Ing., 70372 Stuttgart (DE); Müller, Frank, Dipl.- Ing., 75397 Simmozheim (DE)
(74) Vertreter: Grauel, Andreas

(56) Entgegenhaltungen:
- EP-A1- 1 155 886
- EP-A2- 1 297 978
- DE-C1- 19 731 369
- US-A1- 2001 022 092

## Beschreibung

Die Erfindung betrifft eine Kraftfahrzeug-Klimaanlage, insbesondere eine Klimaanlage mit CO₂ als Kältemittel, gemäß dem Oberbegriff des Anspruches 1. US 2001/0022092 A2 offenbart ein Verfahren gemäß Oberbegriff des Anspruchs 1.

Bei Kraftfahrzeug-Klimaanlagen kann es insbesondere in Folge undichter Leitungen, insbesondere auch im Bereich des Verdampfers, zu einer Leckage des Kältemittels kommen. Dies ist insbesondere dann unerwünscht, wenn die Leitungen im Fahrzeuginnenraum angeordnet sind oder mit dem Fahrzeuginnenraum in Verbindung stehen, und somit dort für die Insassen gefährlich hohe Kältemittelkonzentrationen auftreten können. So wirkt z.B. CO₂ ab einer gewissen Konzentration giftig.

Es ist Aufgabe der Erfindung, eine verbesserte Kraftfahrzeug-Klimaanlage zur Verfügung zu stellen. Diese Aufgabe wird gelöst durch eine Kraftfahrzeug-Klimaanlage mit den Merkmalen des Anspruchs 1. Vorteilhafte Ausgestaltungen sind Gegenstand der Unteransprüche.

Erfindungsgemäß sind ein Verfahren nach Anspruch 1 und eine Kraftfahrzeug-Klimaanlage, insbesondere eine Kraftfahrzeug-Klimaanlage mit einem für die Insassen und Umweit in den im Leckagefall möglicherweise austretenden Mengen und Konzentrationen nicht schädlichem, insbesondere nicht giftigem Medium als Kältemittel, vorzugsweise R744 (CO₂), nach Anspruch 4 vorgesehen. Durch die Unterbrechung des bzw. der Luftwege zwischen dem Bereich der Klimaanlage, in welchem der Verdampfer angeordnet ist, und dem Fahrzeuginnenraum kann ein Eindringen des Kältemittels in den Fahrzeuginnenraum und somit eine mögliche Gefährdung der Insassen sicher und auf einfache Weise vermieden werden. Da das Kältemittel, zumindest im Falle von CO₂, in den gegebenenfalls austretenden Mengen nicht schädlich für die Umwelt ist, kann es direkt nach außen an die Umgebung abgeführt werden, d.h. es sind keine weiteren Maßnahmen, wie beispielsweise Zwischenspeicher o.ä., erforderlich.

Vorzugsweise ist mindestens ein Kondensatablauf vorgesehen, durch welchen bei Normalbetrieb das sich im Verdampfer sammelnde Kondensat nach außen abgeleitet werden kann und der zumindest im Falle eines Motorstillstands und/oder bei stehender Kraftfahrzeug-Klimaanlage einen offenen Verbindungskanal von dem Bereich der Klimaanlage, in welchem der Verdampfer angeordnet ist, nach außen bildet. Da über den Kondensatablauf üblicherweise allein durch die Wirkung der Schwerkraft das Kondensat nach außen abgeführt wird und dieser somit im unteren Bereich und mit einem ausreichenden Gefälle versehen angeordnet ist, kann der Kondensatablauf ohne spezielle Maßnahmen auch für die Abführung des sich sammelnden gasförmigen Kältemittels verwendet werden, da dieses üblicherweise schwerer als die wesentlichen Luftbestandteile (wie insbesondere O₂ und N₂) ist, und sich deshalb im unteren Bereich sammelt und somit auch ohne spezielle Maßnahmen durch den Kondensatablauf nach außen strömt.

Die Regelung ist vorzugsweise derart ausgelegt, dass im Falle eines Motorstillstands und/oder bei stehender Kraftfahrzeug-Klimaanlage mindestens eine Frischluft-Klappe geöffnet ist. Dies ist im Falle einer direkten Koppelung der Frischluft- und Umluft-Klappe automatisch der Fall, im Falle voneinander (bedingt) unabhängiger Öffnungszustände ist jedoch sicherzustellen, dass die Umluft-Klappe im Wesentlichen vollständig geschlossen ist, während die Frischluft-Klappe möglichst weit geöffnet ist, um einen möglichst kleinen Strömungswiderstand für das gasförmige Kältemittel zu bilden. Ein Ausströmen durch die Frischluft-Klappe erfolgt insbesondere im Falle größerer Leckagemengen, die nicht ausschließlich über den gegebenenfalls auch vorhandenen Kondensatablauf abgeführt werden können.

Es ist bei den Luftkanälen, die zwischen dem Bereich der Klimaanlage, in welchem der Verdampfer angeordnet ist, und dem Fahrzeuginnenraum vorgesehen sind, jeweils mindestens eine Klappe geschlossen, die in dem oder an einem Ende des Luftkanals angeordnet ist. Hierbei handelt es sich vorzugsweise um Umluft-, Defrost-, Belüftungs- und/oder Fußraum-Klappen, welche jeweils den entsprechenden Luftkanal verschließen, so dass keine zusätzlichen baulichen Maßnahmen, die mit einer Umkonstruktion der Klimaanlage verbunden wären, getroffen werden müssen. Vielmehr reicht eine einfache Implementierung der Schließfunktion für den Falle eines Motorstillstands und/oder bei stehender Kraftfahrzeug-Klimaanlage in die vorhandene Regelungssoftware.

Ferner kann zur Überwachung des Drucks und somit des Füllstands des Kältemittelkreislaufs (und somit einer möglichen Leckage) ein Drucksensor im Kältemittelkreislauf vorgesehen sein, wobei der Drucksensor mit der Reglung verbunden ist und die Regelung des Schließens der Klappen ab dem Unterschreiten eines vorgegebenen Grenzwertes und/oder bei Überschreiten eines abfallenden Druckgradienten aktiviert wird. Zuvor ist von keiner Leckage auszugehen, so dass auf die vorgenannten Maßnahmen verzichtet werden kann.

Um im Falle eines Motorstarts oder vorab im Falle eines Öffnens, also bei einer Aktivierung der Kraftfahrzeug-Regelung, eines Fahrzeugs, das über längere Zeit ohne Betätigung der Klimaanlage gestanden ist, schnell das sich gegebenenfalls in der Klimaanlage gesammelte Kältemittel abzuführen, wird das Gebläse der Kraftfahrzeug-Klimaanlage zuerst kurzfristig in umgekehrter Richtung betrieben, oder es ist ein anderes, aus dem Innenraum der Kraftfahrzeug-Klimaanlage absaugendes Gebläse vorgesehen, das in diesem Fall betrieben wird, wobei die geöffnete Klappenstellung der Frischluftklappe zumindest so lange beibehalten werden, bis zumindest ein Teil der in der Klimaanlage enthaltenen Luft nach außen abgeführt wurde. Danach kann die Klimaanlage auf übliche Weise betrieben werden. Der mit dem Absaugen verbundene Luftaustausch kann durch das Öffnen der Klappen zum Fahrzeuginnenraum unterstützt werden.

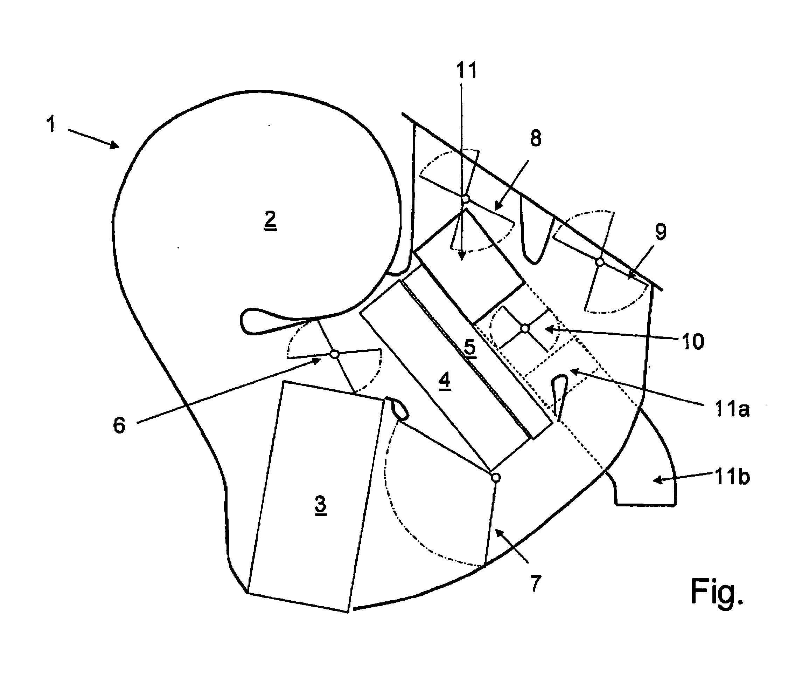

Im Folgenden wird eine Kraftfahrzeug-Klimaanlage anhand eines Ausführungsbeispiels unter Bezugnahme auf die Zeichnung im Einzelnen erläutert. Die einzige Figur der Zeichnung zeigt eine schematische Darstellung einer Kraftfahr-zeug-Klimaanlage, die im Folgenden in ihrer Gesamtheit durch das Bezugszeichen 1 bezeichnet ist.

Die Klimaanlage 1 weist ein Gebläse 2, einen Verdampfer 3 und einen Heizkörper 4 mit PTC-Zuheizer 5 auf. Hierbei ist parallel zum Verdampfer 3 eine Bypass-Klappe 6 vorgesehen, welche einen benachbart zum Verdampfer 3 angeordneten Bypass freigibt oder verschließt, der ein Vorbeiströmen der vom Gebläse 2 kommenden Luft am Verdampfer 3 ermöglicht. Hinter dem Verdampfer 3 ist eine weitere Klappe 7 vorgesehen, welche die vom Verdampfer 3 kommende Luft entweder durch den Heizkörper 4 mit PTC-Zuheizer 5 oder an ihm vorbei leitet. Hierbei sind Zwischenstellungen der Klappe 7 möglich. Nach den Wärmetauschern 3 und 4 ist eine Defrost-Klappe 8 zum Entfemen eines Beschlags an der Windschutzscheibe, welche einen Defrost-Luftkanal bei Bedarf öffnet oder verschließt, und eine Belüftungs-Klappe 9 zum Belüften des Fahrzeuginnenraums z.B. über Mittel- und Seitendüsen, welche einen Belüftungs-Luftkanal bei Bedarf öffnet oder verschließt, vorgesehen.

Ferner ist direkt nach dem Heizkörper 4 eine Fußraum-Klappe 10 angeordnet, welche einen Luftkanal 11 zum Fußraum nach Bedarf freigibt oder verschließt, wobei auch Zwischenstellungen der Fußraum-Klappe 10 möglich sind. Der Luftkanal 11 verzweigt sich gemäß dem vorliegenden Ausführungsbeispiel unmittelbar nach der Klappe 10 in einen Luftkanal 11a, welcher der seitlichen Luftzufuhr zum Fußraum dient, und einen Luftkanal 11b, welcher der hinteren Luftzufuhr zum Fußraum dient.

Die Luft wird im Normalbetrieb vom Gebläse 2 - je nach Stellung der Umluft- und Frischluft-Klappen (nicht dargestellt) - aus der Umgebung (Frischluft) und/oder aus dem Fahrzeuginnenraum angesaugt und zur Temperierung durch die zuvor beschriebene Kraftfahrzeug-Klimaanlage 1 und über die verschiedenen Luftkanäle in Abhängigkeit der entsprechenden Klappenstellungen der Klappen 8, 9 und 10 in die entsprechenden Bereiche des Fahrzeuginnenraums geleitet.

Da sich üblicherweise ein Teil der in der Luft enthaltenen Luftfeuchtigkeit als Kondensat im Verdampfer 3 niederschlägt, ist ein Kondensatablauf (nicht dargestellt) vorgesehen, durch welchen das Kondensat nach außen abgegeben werden kann, Vorliegend ist der Kondensatablauf derart ausgebildet, dass das Kondensat von selbst abläuft, wobei er stets offen ist.

Bei der Klimaanlage 1 handelt es sich um eine herkömmliche Klimaanlage, wobei als Kältemittel in einem Kältekreislauf, der den Verdampfer 3 beinhaltet, vorliegend R744 verwendet wird. Da es bei derartigen Kältekreisläufen insbesondere im Bereich des Verdampfers zu einer Kältemittelleckage, verbunden mit einer Ansammlung von ausgetretenem Kältemittel im Fahrzeuginnenraum kommen kann, welche im Extremfall für die Insassen gefährlich sein kann, in jedem Fall aber unerwünscht ist, ist die Regelung der Klimaanlage 1 vorliegend derart ausgelegt, dass bei einem Motorstillstand bei stehender Klimaanlage 1 sämtliche Verbindungswege, d.h. Luftkanäle, zwischen dem Bereich, in welchem der Verdampfer 3 der Klimaanlage 1 angeordnet ist, und dem Fahrzeuginnenraum durch die funktionsbedingt bereits vorhandenen, zumindest im Wesentlichen gasdichten Klappen verschlossen werden. Dies betrifft gemäß dem vorliegenden Ausführungsbeispiel die in der Figur dargestellten Klappen 8, 9 und 10 und außerdem noch die nicht in der Zeichnung dargestellte Umluftklappe, die in normaler Luftströmungsrichtung vor dem Gebläse 2 angeordnet ist.

Die Frischluftklappe ist - auf Grund der geschlossenen Umluftklappe, mit welcher dieselbe gekoppelt ist - gemäß dem vorliegenden Ausführungsbeispiel geöffnet, so dass das gegebenenfalls als Leckage aus dem Verdampfer 3 ausgetretene Kältemittel entgegen der normalen Luftströmungsrichtung durch das Gebläse 2 und die Frischluftklappe strömen und an die Umgebung abgegeben werden kann. Im Normalfall, d.h. bei relativ geringen Leckageraten wird das gegebenenfalls ausgetretene gasförmige Kältemittel über den offenen Kondensatablauf des Verdampfers, welcher eine weitere direkte Verbindung mit der Umgebung darstellt, nach außen gelangen, da sich das CO₂, das etwas schwerer als Luft ist, es sich im unteren Bereich sammelt und dadurch durch den normalerweise vom flüssigen Kondensat durchströmten Kondensatablauf nach außen gelangt. Nur bei größeren Leckageraten gelangt das gasförmige Kältemittel über die Frischluftklappe nach außen. Das austretende CO₂ belastet als auch in der Natur vorkommendes Gas auf Grund der relativ geringen freigesetzten Mengen die Umwelt nicht.

Diese Betätigung der Aktuatoren der entsprechenden Klappen kann auf besonders einfach zu regelnde Weise dadurch ausgelöst werden, dass das Kraftfahrzeug von außen abgeschlossen wird.

## Patentansprüche

1. Verfahren zur Regelung einer Kraftfahrzeug-Klimaanlage, insbesondere einer Kraftfahrzeug-Klimaanlage (1) mit CO₂ als Kältemittel, mit mindestens einem Verdampfer und mindestens einer Regeleinheit, welche die Stellung einer Mehrzahl von Klappen (8, 9, 10) regelt, **dadurch gekennzeichnet, dass** im Falle eines Motorstillstands und/oder bei stehender Kraftfahrzeug-Klimaanlage (1) die Luftwege von dem dem Bereich der Klimaanlage, in welchem der Verdampfer angerordnet ist, zum Fahrzeuginnenraum, durch Klappe(n) (8, 9, 10) abgesperrt werden, wobei bei einer Aktivierung der Kraftfahrzeug-Regelung oder einem Motorstart nach einem Motorstillstand mit stehender Kraftfahrzeug-Klimaanlage (1) das Gebläse der Kraftfahrzeug-Klimaanlage (1) zuerst kurzfristig in umgekehrter Richtung oder ein anderes, aus dem Innenraum der Kraftfahrzeug-Klimaanlage (1) absaugendes Gebläse betrieben und die Klappenstellung einer Frischluftklappe zumindest so lange in geöffneter Stellung beibehalten wird, bis zumindest ein Teil der in der Klimaanlage (1) enthaltenen Luft nach außen abgeführt wurde.

2. Verfahren nach Anspruch 1, **dadurch gekennzeichnet, dass** in mindestens einem der Luftkanäle, die zwischen der Kraftfahrzeug-Klimaanlage und dem Fahrzeuginnenraum vorgesehen sind, alle Klappen (8, 9, 10), die in dem oder an einem Ende des Luftkanals angeordnet sind, geöffnet werden.

3. Verfahren nach einem der Ansprüche 1 bis 2, **dadurch gekennzeichnet, dass** ein Sensor den Druck im Kältemittelkreislaufs überwacht und die Regelung der Klappen (8, 9, 10) bei einem Motorstart nach einem Motorstillstand mit stehender Kraftfahrzeug-Klimaanlage (1) bei dem Unterschreiten eines vorgegebenen Druckgrenzwertes und/oder bei zu gering ansteigendem und/oder abfallenden Druckgradienten einsetzt.

4. Kraftfahrzeug-Klimaanlage, insbesondere Kraftfahrzeug-Klimaanlage (1) mit CO₂ als Kältemittel, zur Durchführung eines Verfahrens nach einem der vorhergehenden Ansprüche 1 bis 3, mit mindestens einem Verdampfer (3) und mindestens einer Regeleinheit, welche die Stellung einer Mehrzahl von Klappen (8, 9, 10) regelt, wobei das Gebläse der Klimaanlage (1) in umgekehrter Richtung betreibbar ist und/oder ein Gebläse vorgesehen ist, welches bei Bedarf Luft aus der Klimaanlage nach außen fördert.

5. Kraftfahrzeug-Klimaanlage nach Anspruch 4, **dadurch gekennzeichnet, dass** mindestens ein Kondensatablauf vorgesehen ist, der zumindest im Falle eines Motorstillstands und/oder bei stehender Kraftfahrzeug-Klimaanlage (1) einen offenen Verbindungskanal von dem Bereich der Klimaanlage (1), in welchem der Verdampfer (3) angeordnet ist, nach außen bildet.

6. Kraftfahrzeug-Klimaanlage nach Anspruch 4 oder 5, **dadurch gekennzeichnet, dass** die Regelung derart ausgelegt ist, dass im Falle eines Motorstillstands und/oder bei stehender Kraftfahrzeug-Klimaanlage (1) mindestens eine Frischluftklappe geöffnet ist.

7. Kraftfahrzeug-Klimaanlage nach einem der vorhergehenden Ansprüche 4 bis 6 , **dadurch gekennzeichnet, dass** mindestens einer der Luftwege durch mindestens eine die Luftzufuhr und -verleihung im Normalbetrieb regelnde Umluft-Klappe, Defrost-Klappe (8), Belühungs-Klappe (9) und/oder Fußraum Klappe (10) versperrt ist.

8. Kraftfahrzeug-Klimaanlage nach einem der vorhergehenden Ansprüche 4 bis 7, **dadurch gekennzeichnet, dass** ein Drucksensor im Kältemittelkreislauf vorgesehen ist, wobei der Drucksensor mit der Reglung verbunden ist und die Regelung des Schließens der Klappen ab dem Unterschreiten eines vorgegebenen Grenzwertes und/oder bei Überschreiten eines abfallenden Druckgradienten aktiviert wird.

## Claims

1. A method for controlling a motor vehicle air-conditioning system, in particular a motor vehicle air-conditioning system, (1) with CO2 as coolant, comprising at least one evaporator and at least one control unit, which controls the position of a number of flaps (8, 9, 10), **characterised in that**, when the engine is stopped and/or with non-operation of the motor vehicle air-conditioning system (1), the air paths from the region of the air-conditioning system, in which the evaporator is arranged, to the vehicle interior are closed off by one or more flaps (8, 9, 10), wherein, upon activation of the motor vehicle controller or when the engine is started after having been stopped with non-operation of the motor vehicle air-conditioning system (1), the fan of the motor vehicle air-conditioning system (1) is initially operated in the short term in the reverse direction or another fan drawing air from the interior of the motor vehicle air-conditioning system (1) is operated, and the flap position of a fresh air flap is kept in the open position, at least until at least some of the air contained in the air-conditioning system (1) has been discharged outwardly.

2. The method according to claim 1, **characterised in that**, in at least one of the air ducts, which are provided between the motor vehicle air-conditioning system and the vehicle interior, all flaps (8, 9, 10), which are arranged in the air duct or at the end of the air duct, are open.

3. The method according to one of claims 1 to 2, **characterised in that** a sensor monitors the pressure in the coolant circuit and, when the engine is started after having been stopped with non-operation of the motor vehicle air-conditioning system (1), initiates control of the flaps (8, 9, 10) when the pressure falls below a predefined pressure threshold and/or when pressure gradients increase insufficiently and/or fall.

4. A motor vehicle air-conditioning system, in particular a motor vehicle air-conditioning system (1) with CO2 as coolant, for carrying out a method according to one of the preceding claims 1 to 3, comprising at least one evaporator (3) and at least one control unit, which controls the position of a number of flaps (8, 9, 10), wherein the fan of the air-conditioning system (1) can be operated in the reverse direction and/or a fan is provided that conveys air outwardly from the air-conditioning system as required.

5. The motor vehicle air-conditioning system according to claim 4, **characterised in that** at least one condensate discharge is provided, which forms an open connecting duct from the region of the air-conditioning system (1), in which the evaporator (3) is arranged, to the outside environment, at least when the engine is stopped and/or with non-operation of the motor vehicle air-conditioning system (1).

6. The motor vehicle air conditioning system according to claim 4 or 5, **characterised in that** the controller is designed in such a way that at least one fresh air flap is open when the engine is stopped and/or with non-operation of the motor vehicle air-conditioning system (1).

7. The motor vehicle air-conditioning system according to one of the preceding claims 4 to 6, **characterised in that** at least one of the air paths through at least one recirculating air flap, defrosting flap (8), ventilating flap (9) and/or footwell flap (10) controlling the air supply and air distribution during normal operation is blocked.

8. The motor vehicle air-conditioning system according to one of the preceding claims 4 to 7, **characterised in that** a pressure sensor is provided in the coolant circuit, wherein the pressure sensor is connected to the controller and the control of the closing of the flaps is activated from the point at which pressure falls below a predefined threshold and/or a falling pressure gradient is exceeded.

## Revendications

1. Procédé de réglage d'un système de climatisation d'un véhicule automobile, en particulier d'un système de climatisation (1) d'un véhicule automobile fonctionnant avec du CO₂ servant de fluide frigorigène, comprenant au moins un évaporateur et au moins un dispositif de réglage qui règle la position d'une pluralité de volets (8, 9, 10),
**caractérisé en ce que**, dans le cas d'un arrêt du moteur et/ou lors d'un arrêt du système de climatisation (1) d'un véhicule automobile, les trajectoires d'air, depuis la zone du système de climatisation dans laquelle est dispose l'évaporateur, jusqu'à l'habitacle du véhicule, sont fermées par un ou des volets (8, 9, 10), où, lors d'une activation de la régulation du véhicule automobile, ou bien dans le cas d'une mise en route du moteur après un arrêt de celui-ci se produisant avec un arrêt du système de climatisation (1) du véhicule automobile, le pulser du système de climatisation (1) du véhicule automobile est actionné, d'abord pendant un court laps de temps, dans une direction inversée, ou bien un autre pulser fonctionnant par aspiration depuis l'habitacle du système de climatisation (1) du véhicule automobile, est actionné, et la position d'un volet d'air frais est maintenue en position ouverte, au moins aussi longtemps qu'au moins une partie de l'air contenu dans le système de climatisation (1) soit évacuée vers l'extérieur.

2. Procédé selon la revendication 1, **caractérisé en ce que** dans au moins l'un des conduits d'air, qui sont prévus entre le système de climatisation du véhicule automobile et l'habitacle du véhicule, tous les volets (8, 9, 10), qui sont disposés dans l'extrémité ou au niveau d'une extrémité du conduit d'air, sont ouverts.

3. Procédé selon l'une des revendications 1 à 2, **caractérisé en ce qu'**un capteur surveille la pression dans le circuit du fluide frigorigène, et le réglage des volets (8, 9, 10), dans le cas d'une mise en route du moteur après un arrêt de celui-ci se produisant avec un arrêt du système de climatisation (1) du véhicule automobile, intervient lors du dépassement d'une valeur limite inférieure de pression prédéfinie et/ou en cas de gradients de pression augmentant et/ou chutant trop faiblement.

4. Système de climatisation d'un véhicule automobile, en particulier système de climatisation (1) d'un véhicule automobile fonctionnant avec du CO₂ servant de fluide frigorigène, prévu pour la mise en oeuvre d'un procédé selon l'une quelconque des revendications précédentes 1 à 3, comprenant au moins un évaporateur (3) et au moins un dispositif de réglage qui règle la position d'une pluralité de volets (8, 9, 10), où le pulseur du système de climatisation (1) peut être actionné dans une direction inversée et/ou il est prévu un pulseur qui, en cas de besoin, transporte vers l'extérieur de l'air provenant du Système de climatisation.

5. Système de climatisation d'un véhicule automobile selon la revendication 4, **caractérisé en ce qu'**il est prévu au moins un processus de condensat qui, au moins dans le cas d'un arrêt du moteur et/ou lors d'un arrêt du système de climatisation (1) du véhicule automobile, forme vers l'extérieur un conduit de communication ouvert, depuis la zone du système de climatisation (1) dans laquelle est disposé l'évaporateur (3).

6. Système de climatisation d'un véhicule automobile selon la revendication 4 ou 5, **caractérisé en ce que** le réglage est conçu de manière telle, que dans le cas d'un arrêt du est conçu de manière telle, que dans le cas d'un arrêt du moteur et/ou lors d'un arrêt du système de climatisation (1) du véhicule automobile, au moins un volet d'air frais soit ouvert.

7. Système de climatisation d'un véhicule automobile selon l'une quelconque des revendication précédentes 4 à 6, **caractérisé en ce qu'**au moins l'une des trajectoires d'air est fermée par au moins un volet d'air recyclé, un volet de dégivrage (8), un volet de ventilation (9) et/ou un volet (10) de l'espace pour les pieds, ces volets réglant l'alimentation et la répartition de l'air au cours du fonctionnement normal.

8. Système de climatisation d'un véhicule automobile selon l'une quelconque des revendications précédentes 4 à 7, **caractérisé en ce qu'**il est prévu un capteur de pression dans le circuit de fluide frigorigène, où lue capteur de pression est relié au réglage, et le réglage de la fermeture des volets est activé à partir du moment où une valeur limite inférieure prédéfinie est dépassée et/ou lors du dépassement de la limite supérieure d'un gradient de pression diminuant
